# EUROPEAN PATENT APPLICATION

(11) **EP 3 772 036 A1**
(43) Date of publication of application: **03.02.2021**
(21) Application number: 18911696.5
(22) Date of filing: 19.12.2018
(51) Int. Cl.: G06T 7/00

(54) **DETECTION OF NEAR-DUPLICATE IMAGE**

(30) Priority: 30.03.2018 CN 201810277058
(71) Applicant: Beijing Sankuai Online Technology Co., Ltd, Beijing 100080 (CN)
(72) Inventor: Kang, Liping, Beijing 10080 (CN); Wei, Xiaoming, Beijing 10080 (CN)
(74) Representative: Lavoix
(86) International application number: PCT/CN2018/122069
(87) International publication number: WO 2019/184464

(57) **Abstract**

The embodiments of the present disclosure provide a method and an apparatus of detecting a near-duplicate image, an electronic device, and a computer-readable storage medium. According to an example of the method, after the first feature and the second feature of the input target image are respectively determined through a multi-task network model, wherein the first feature includes image features reflecting an inter-category difference and an intra-category difference, the second feature indicates an image feature reflecting an intra-category difference. The fusion feature of the target image can be constructed based on the first feature and the second feature of the target image, and whether the target image is a near-duplicate image of a candidate image is determined based on the fusion feature.

## Description

### CROSS REFERENCE TO RELATED APPLICATIONS

This application claims priority to Chinese Patent Application No. 201810277058.9, entitled "METHOD AND APPARATUS OF DETECTING NEAR-DUPLICATE IMAGE, AND ELECTRONIC DEVICE" filed on March 30, 2018, the entire content of which is incorporated herein by reference.

### TECHNICAL FIELD

The present disclosure relates to the field of computer technology, and in particular, to detection of near-duplicate images.

### BACKGROUND

Near-duplicate images refer to images that only differ in color, saturation, cropping, shooting angle, watermark, etc. There are various types of near-duplicate images in UGC (User Generated Content) data. Such near-duplicate images will negatively affect the training of search-recommendation models and the display of search-recommendation results, thereby affecting the user experience.

### SUMMARY

In view of above, the present disclosure provides a method of detecting a near-duplicate image, in order to improve accuracy of detecting a near-duplicate image in the related art.

In a first aspect, an embodiment of the present disclosure provides a method of detecting a near-duplicate image, comprising: respectively determining a first feature and a second feature of an input target image through a multi-task network model, wherein the first feature comprises an image feature reflecting an inter-category difference and an intra-category difference, and the second feature indicates an image feature reflecting an intra-category difference; constructing a fusion feature of the target image based on the first feature and the second feature of the target image; and determining whether the target image is a near-duplicate image of a candidate image based on the fusion feature.

In a second aspect, an embodiment of the present disclosure provides an apparatus of detecting a near-duplicate image, comprising: a feature extraction module configured to respectively determine a first feature and a second feature of an input target image through a multi-task network model, wherein the first feature comprises an image feature reflecting an inter-category difference and an intra-category difference, and the second feature indicates an image feature reflecting an intra-category difference; a feature fusion module configured to construct a fusion feature of the target image based on the first feature and the second feature of the target image extracted by the feature extraction module; and a near-duplicate image detection module configured to determine whether the target image is a near-duplicate image of a candidate image based on the fusion feature determined by the feature fusion module.

In a third aspect, an embodiment of the present disclosure provides an electronic device comprising a memory, a processor, and a computer program stored on the memory and executable on the processor, wherein the computer program is executed by the processor to implement the method of detecting a near-duplicate image described in the embodiments of the present disclosure.

In a fourth aspect, an embodiment of the present disclosure provides a computer-readable storage medium having a computer program stored thereon, wherein the program is executed by a processor to implement the steps of the method of detecting a near-duplicate image described in the embodiments of the present disclosure.

In the method of detecting near-duplicate images disclosed in embodiment of the present disclosure, a first feature and a second feature of input target image are respectively determined through a multi-task network model, wherein the first feature includes an image feature that reflects an inter-category difference and an intra-category difference, and the second feature indicates an image feature that reflects an intra-category difference; based on the first feature and second feature of the target image, a fusion feature of the target image is constructed; and based on the fusion feature, it is determined whether the target image is a near-duplicate image of a candidate image. By combining the intra-category information and the inter-category information of an image to construct the fusion feature of the image, the method of detecting near-duplicate images disclosed in the present disclosure makes sure that the image fusion feature is more comprehensive, thereby improving the accuracy of detecting a near-duplicate image.

### BRIEF DESCRIPTION OF THE DRAWINGS

In order to more clearly describe the technical solutions of the embodiments of the present disclosure, the following will briefly introduce the drawings that need to be referred to in the description of the embodiments or the related art. Apparently, the drawings in the following description are merely present for some of the embodiments of the application, for those of ordinary skill in the art, other drawings may be obtained based on these drawings without creative effort.
FIG. 1 is a flowchart illustrating a method of detecting a near-duplicate image according to a first embodiment of the present disclosure;
FIG. 2 is a flowchart illustrating a method of detecting a near-duplicate image according to a second embodiment of the present disclosure;
FIG. 3 is a schematic structural diagram illustrating a classification model according to the second embodiment of the present disclosure;
FIG. 4 is a schematic structural diagram of a multi-task network according to the second embodiment of the present disclosure;
FIG. 5 is a schematic diagram of near-duplicate images;
FIG. 6 is a schematic diagram of a non-near-duplicate image pair;
FIG. 7 is a first block diagram illustrating an apparatus of detecting a near-duplicate image according to a third embodiment of the present disclosure;
FIG. 8 is a second block diagram illustrating an apparatus of detecting a near-duplicate image according to the third embodiment of the present disclosure;
FIG. 9 is a third block diagram illustrating an apparatus of detecting a near-duplicate image according to the third embodiment of the present disclosure.

### DETAILED DESCRIPTION OF THE EMBODIMENTS

The following will clearly and completely describe the technical solutions in the embodiments of the present disclosure in conjunction with the drawings in the embodiments of the present disclosure. Apparently, the described embodiments are some of the embodiments of the present disclosure, rather than all of them. Based on the embodiments in the present disclosure, all other embodiments obtained by those of ordinary skill in the art without creative work fall within the protection scope of the present disclosure.

In some applications, image features are first acquired through classification methods, and then the images are detected. For images of different categories, the acquired features have better distinguishability. However, in a near-duplicate image detection scenario, most of the images in a candidate set are of the same category. Using the image feature expression method to detect images will have the problem of low detection accuracy.

In view of this, the method of detecting a near-duplicate image provided by the present disclosure can improve the accuracy of detecting near-duplicate images. Description will be given below in conjunction with specific embodiments.

### First Example

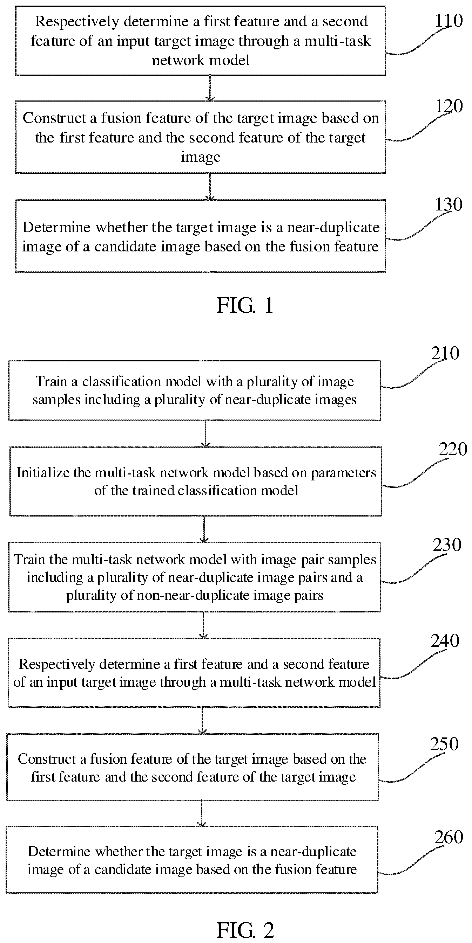

This embodiment discloses a method of detecting a near-duplicate image. As shown in FIG. 1, the method includes step 110 to step 130.

Step 110, a first feature and a second feature of an input target image are respectively determined through a multi-task network model.

The first feature includes an image feature reflecting an inter-category difference and an intra-category difference, and the second feature indicates an image feature reflecting an intra-category difference.

During the implementation of the present disclosure, a multi-task network model is previously trained. The multi-task network model includes multiple sub-networks, such as a classification network, a similarity measurement network, etc., and the classification network and the similarity measurement network share a basic network. The basic network is used to extract the first feature of the input image, and the similarity measurement network is used to extract the second feature of the input image. The optimization goal of the classification network is to maximize the inter-category variance, and the optimization goal of the similarity measurement network is to reduce the intra-category variance between near-duplicate images and increase the intra-category variance between non-near-duplicate images. In the optimization process, increasing the inter-category variance is to make the image features of different categories more distinguishable, and reducing the intra-category variance in the optimization process is to make the image features of the same category as approximate to each other as possible.

The classification network and the similarity measurement network are convolutional neural networks, which respectively include multiple convolutional layers and feature extraction layers. In specific implementation, the classification network can select a deep convolutional neural network such as MobileNet, and then, the output of a certain feature extraction layer of the basic network can be selected as the first feature of the input image. The feature extraction layer is essentially a convolutional layer. In this embodiment, the last convolutional layer in the network structure of the basic network is used as the feature expression of the image, which can be called the feature extraction layer. The similarity measurement network may be a symmetric convolutional neural network, and then the output of a certain convolutional layer (such as the last convolutional layer of the similarity measurement network) can be taken as the second feature of the input image. Each input image is called a target image. Each target image is input to the multi-task network model to obtain the first feature and the second feature of each target image.

Step 120, a fusion feature of the target image is constructed based on the first feature and the second feature of the target image.

After determining the first feature and the second feature of the target image in an image pair to be detected, for each of the target images, a fusion feature of the target image is constructed based on the first feature and the second feature of the image. In one embodiment, the first feature and the second feature of the image can be directly spliced to obtain the fusion feature of the image. In another embodiment, the first feature and the second feature of the image may be further code-converted separately, such as hash code conversion, and the fusion feature of the image can be determined from the codes obtained by the conversion.

Since the first feature of each target image indicates a general feature of the input image extracted by the basic network, that is, the first feature indicates an image feature that reflects the inter-category difference and the intra-category difference, therefore, the first feature may be further subjected to convolution processing through the classification network to obtain a third feature that separately reflects the inter-category difference. Then, based on the third feature and the second feature, the fusion feature of the corresponding image is constructed. In one embodiment, the third feature and the second feature of the image can be directly spliced to obtain the fusion feature of the image. In another embodiment, the third feature and the second feature of the image may be further code-converted separately, such as hash code conversion, and the fusion feature of the image can be determined from the codes obtained by the conversion.

Step 130, it is determined whether the target image is a near-duplicate image of a candidate image based on the fusion feature.

For the target image, the fusion feature of the target image can be obtained through the steps described above. In addition, a candidate image set is stored in advance, and the fusion feature of each image in the candidate image set is obtained through the steps described above. Further, the similarity measurement method in the related art can be used to compare the fusion feature of the target image with the fusion feature of any candidate image in the candidate image set, so as to determine whether the target image and the candidate image are near-duplicate images of each other.

In the method of detecting a near-duplicate image disclosed in embodiment of the present disclosure, a first feature and a second feature of input target image are respectively determined through a multi-task network model, wherein the first feature includes an image feature reflecting an inter-category difference and an intra-category difference, and the second feature indicates an image feature reflecting an intra-category difference; based on the first feature and second feature of the target image, a fusion feature of the target image is constructed; and based on the fusion feature, it is determined whether the target image is a near-duplicate image of a candidate image. By combining the intra-category information and the inter-category information of an image to construct the fusion feature of the image, the method of detecting a near-duplicate image disclosed in the present disclosure makes sure that the image fusion feature is more comprehensive, thereby improving the accuracy of detecting a near-duplicate image.

### Second Example

This embodiment discloses a method of detecting a near-duplicate image. As shown in FIG. 2, the method includes step 210 to step 260.

Step 210, a classification model is trained with a plurality of image samples including a plurality of near-duplicate images.

The plurality of near-duplicate images described in this embodiment may be composed of different images of the same object, for example, a plurality of images of the same object captured under different illumination conditions, or may be composed of an original image of an object and images cut, rotated or brightness adjusted from the original image. The non-near-duplicate images in the embodiments of the present disclosure refer to at least two images of different objects.

First, a plurality of similar images of different categories already existed on a platform are collected as a plurality of image samples to train the classification model. The plurality of training samples used to train the classification model includes a plurality of near-duplicate images. In actual application, it may be difficult to collect a large number of images that are similar or duplicate to the original image as training data, so the training samples can be synthesized based on existing images. Taking the Meituan Review platform as an example, first a plurality of images of all business types (such as 22 business types) covering all business scenarios of the platform are collected and sorted. The determination of the image category mainly considers actual application scenarios. Image categories are matched with business scenarios, such as hotels, dishes, beauties, etc. The distribution of image categories covers as many business scenarios as possible to improve the accuracy of models trained using images. Then, a plurality of images of each category is synthesized to obtain a plurality of sets of near-duplicate images as a plurality of image samples. In practical application scenarios, near-duplicate images of an original image can be transformed versions of the original image. Common transformation operations include geometric affine transformation, blurring, noise pollution, image content enhancement, and compression. Correspondingly, in order to be simulate the near-duplicate images in the actual application scenario, when forming the image samples, the main types of image processing involved may include: brightness change, contrast change, cropping, rotation, watermark, etc. A plurality of images of each category can be automatically synthesized to obtain image samples for training the classification model. The automatic synthesis includes: adjustment of brightness, adjustment of contrast, cropping, rotation, watermarking and other transformation processing.

Then, based on the plurality of image samples, a classification model is trained.

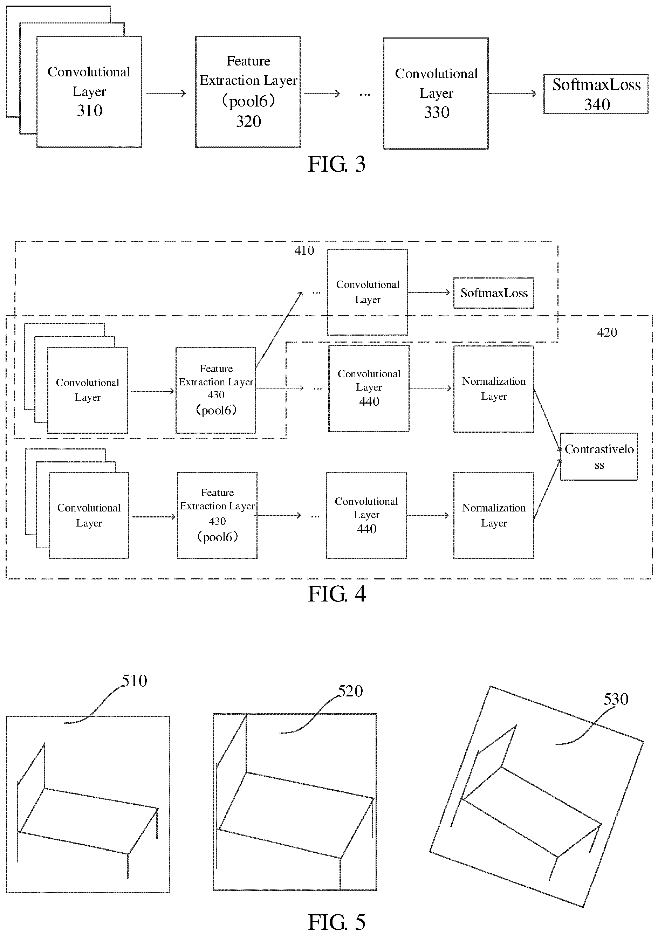

Based on the plurality of image samples including a plurality of near-duplicate images, the classification model is trained. For example, the classification model may be a convolutional neural network based on the MobileNet architecture. MobileNet is a streamlined architecture. It uses deeply separable convolution to build a lightweight deep neural network, which has a good compromise between speed and accuracy. As shown in FIG. 3, the classification model includes a plurality of convolutional layers 310 and a feature extraction layer 320. A pool6 layer of the MobileNet network can be selected as the feature extraction layer. This layer has 1024 nodes, and the output of this layer is used as the expression of the feature vector of the input image. In addition, the classification model also includes a last convolutional layer 330, which is used to generate a confidence that the sample may be a certain category, and a loss function softmaxLoss340, which is used to measure the quality of the model learning. In specific implementation, the optimization goal of the classification model is to maximize the inter-category variance. The features acquired by the trained classification model are mainly used to distinguish image features between different categories. After training, the optimal weight parameters of the classification model can be obtained.

Step 220, the multi-task network model is initialized based on parameters of the trained classification model.

As shown in FIG. 4, the multi-task network model in the embodiment of the present disclosure includes a classification network 410 and a similarity measurement network 420. The classification network 410 and the similarity measurement network 420 are convolutional neural networks, which respectively include multiple convolutional layers and feature extraction layers. The classification network 410 and the similarity measurement network 420 each include a basic network, and the basic network includes a feature extraction layer 430 and a convolutional layer before the feature extraction layer. In an implementation, the classification network 410 and the similarity measurement network 420 may share a basic network. As shown in FIG. 4, the classification network 410 and the similarity measurement network 420 share a part of the convolutional layers and the feature extraction layers. In another implementation, the classification network 410 and the similarity measurement network 420 may also be independent network structures, but the parameters of the basic network are shared. The multi-task network model also includes: a convolutional layer 440, a feature extraction layer for similarity measurement network learning, a normalization layer, which makes the features obtained from the image to be normalized and comparable, and a loss function contrastiveLoss for optimizing the network.

Regardless of whether the classification network 410 and the similarity measurement network 420 share part of the convolutional layers and the feature extraction layers, in order to improve training efficiency, the basic network parameters of the classification network 410 and the similarity measurement network 420 can be initialized with the network parameters of the classification model trained in the steps described above. Then, the network parameters can be fine-tuned and optimized by further training the multi-task network model.

Step 230, the multi-task network model is trained with a plurality of image pair samples including a plurality of near-duplicate image pairs and a plurality of non-near-duplicate image pairs.

After the initialization of the multi-task network is completed, based on the test images of the real business scenario, a plurality of near-duplicate image pairs and a plurality of non-near-duplicate image pairs are constructed to train the multi-task network model. The image pair sample includes an image pair which matches a specified image processing type, and the specified image processing type is determined by: with the trained classification model, determining an image feature of each image in a test image pair; performing a near-duplicate image determination on the test image pair based on a distance between image features of two images in the test image pair; and determining the specified image processing type based on accuracies of a plurality of the near-duplicate determination which are performed on image pairs matching various image processing types. Here, the distance is a distance measurement between feature vectors, which can be an Euclidean distance or a cosine distance. The present disclosure does not limit this.

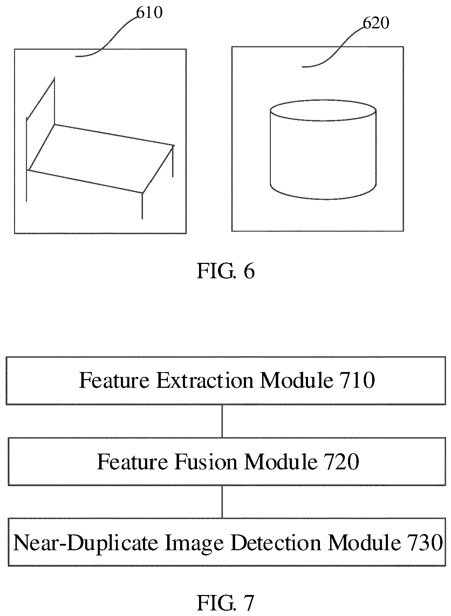

At least one processed image can be obtained from an original image after performing various types of preset image processing on the original image, and the near-duplicate image pair is composed of any two images in an image set, the image set includes at least one processed image and the original image. The near-duplicate image pair may be composed of one processed image and one original image, or the near-duplicate image pair may also be composed of two processed images. Various types of preset image processing include but are not limited to any of the following: cropping, rotation, watermarking, brightness change, contrast change, etc. For example, an original image 510 in FIG. 5 is cropped to obtain an image 520, and the original image 510 is rotated to obtain an image 530, then the original image 510 and the image 520 may form a near-duplicate image pair, the original image 510 and the image 530 may form a near-duplicate image pair, and the image 520 and the image 530 may also form a near-duplicate image pair. The non-near-duplicate image pair is composed of two different images. As shown in FIG. 6, an image 610 and an image 620 constitute a non-near-duplicate image pair.

The plurality of near-duplicate image pairs and the plurality of non-near-duplicate image pairs constructed above are used as test image pairs and input to the classification model trained in step 210, to determine the image features of each image in the test image pair. By inputting the image into the classification model, the 1024-dimensional feature output by the model pool6 layer are obtained as image features, and then a distance between the image features of the two images in the image pair is calculated to determine whether the two images are similar. The test image pair is provided with a label indicating whether it is a near-duplicate image pair. If two images in a near-duplicate image pair are recognized as dissimilar, it is considered that the near-duplicate image decision of the image pair fails, or if two images in a non-near-duplicate image pair are recognized as similar based on a distance between image features, it is considered that the near-duplicate image decision of the image pair fails. Finally, numbers of near-duplicate image pairs that are subject to failed decision are counted according to image processing types, that is, to determine which types of image process the near-duplicate image pairs that are subject to failed decision have undergone. If a decision accuracy of near-duplicate image pairs from a certain type of image process is below a preset accuracy threshold, it is determined that it is hard for the classification model to classify and recognize near-duplicate image pairs obtained from this type of image processing. Then this type of image processing is identified as the hard type.

Near-duplicate image pairs of the hard type are image pairs that are difficult to be distinguished using only the features obtained by classification, such as near-duplicate image pairs obtained after image processing such as cropping, blurring, logo, or rotation. Further, at least one hard type can be obtained based on the above method, and then a plurality of near-duplicate image pairs are constructed based on the hard type. For example, a test image pair identified as a hard type is regarded as near-duplicate image pair, or a large number of hard type test image pairs are selected to construct near-duplicate image pairs. In addition, according to the labels of the test image pairs, different images of the same category are used to construct non-near-duplicate image pairs.

Then, the multi-task network model is trained with a plurality of near-duplicate image pairs and a plurality of non-near-duplicate image pairs constructed for the hard type.

As shown in FIG. 4, the multi-task network model includes a classification network and a similarity measurement network, and the classification network and the similarity measurement network share a basic network. Training the multi-task network model includes: with a plurality of input samples, constantly adjusting the network parameters, so that the output of the classification network and the similarity measurement network are as close as possible to optimization goals of the classification network and the similarity measurement network. The optimization goal of the classification network is to increase the inter-category variance between near-duplicate images; the optimization goal of the similarity measurement network is to reduce the intra-category variance between near-duplicate images and increase the intra-category variance between the non-near-duplicate images. Each image in the near-duplicate image pair and the non-near-duplicate image pair which are input to the multi-task network model includes a category label. When training the classification network, two images or only one image can be input at a time. The input data form of the classification network can be {image, category}, that is, an image with a category label. The loss function of the classification network is softmaxloss(), and the optimization goal is to maximize the inter-category variance.

When training the similarity measurement network, the input data form of the similarity measurement network may be {(image 1, category), (image 2, category), whether the image pair is near-duplicate image pair}. The similarity measurement network is a symmetric convolutional neural network, the loss function is Contrastiveloss(), and the optimization goal is to reduce the intra-category variance between near-duplicate images and increase the intra-category variance between non-near-duplicate images. It should be noted that the above input data form is only used during training, and different input formats can be used in subsequent queries.

For the specific training process of the multi-task network model, reference can be made to the related art, which will not be repeated in this embodiment. The difference between the multi-task network model in the present disclosure and the network model in the related art lies in the network structure, the input training data, the optimization target, and initialization of the corresponding network in the multi-task network model with the network parameters of the preliminarily trained classification model. The optimization process of the model can refer to the model training process of the related art. By training the classification network and the similarity measurement network, the optimal parameters of each layer of the classification network and the similarity measurement network in the multi-task network can be obtained.

Step 240, a first feature and a second feature of the input target image are respectively obtained through the multi-task network model.

The first feature includes an image feature reflecting an inter-category difference and an intra-category difference, and the second feature indicates an image feature reflecting an intra-category difference.

The first feature of the target image is determined through the basic network of the multi-task network model. The second feature of the target image is determined by the similarity measurement network performing a convolution operation on the first feature.

After the multi-task network model training is completed, the trained multi-task network model can be used to extract the image features of the image input to the multi-task network model. According to the network structure of the multi-task network model, the output of the last feature extraction layer of the basic network shared between the classification network and the similarity measurement network is selected as the first feature of the input image, that is, the first feature contains image features that reflect inter-category differences and intra-category differences, such as the image feature which is output by a feature extraction layer 430 (that is, the last convolutional layer of the basic network) in FIG. 4. Although there are two feature extraction layers 430 shown in FIG. 4, the two feature extraction layers 430 share parameters, so the output results are the same. When only one image is input, one of the two feature extraction layers 430 can be selected to output image features. Then, the output of the last convolutional layer of the similarity measurement network is selected as the second feature of the input image, for example, the output of 440 in FIG. 4. The second feature indicates an image feature obtained after performing a convolution operation on the first feature.

In this embodiment, taking the classification network being a MobileNet network as an example, the 1024-dimensional feature extracted by the pool6 layer of the MobileNet network can be used as the first feature of the input image. The 256-dimensional feature obtained by the similarity measurement network further performing convolution process on the 1024-dimensional feature extracted by the pool6 layer of the MobileNet network is used as the second feature of the input image. The 1024-dimensional feature extracted by the pool6 layer of the MobileNet network is a general feature of the input image, and an image feature that reflects the inter-category difference and the intra-category difference. The 256-dimensional feature obtained after convolution processing by the similarity measurement network is more fine-grained image feature that reflects the intra-category difference.

Step 250, a fusion feature of the target image is constructed based on the first feature and the second feature of the target image.

In one embodiment, the first feature and the second feature of the target image can be directly stitched, and the resulted feature from stitching can be used as the fusion feature of the target image. For example, a 1024-dimensional first feature and a 256-dimensional second feature are sequentially spliced into a 1280-dimensional feature vector as the fusion feature of the target image.

In another embodiment, constructing the fusion feature of the target image based on the first feature and the second feature of the target image further includes: obtaining, by a classification network, a third feature of the target image by performing a convolution operation on the first feature of the target image, wherein the third feature indicates an image feature reflecting an inter-category difference. Based on the third feature and the second feature of the target image, a fusion feature of the target image is constructed. For example, through the convolutional layer of the classification network, the convolution operation is performed on the first feature to obtain a third feature that separately reflects the inter-category difference, and then the third feature and the second feature are sequentially spliced into a multi-dimensional feature vector, which is used as the fusion feature of an image. By extracting a third feature that separately reflects the inter-category difference from the first feature, and then constructing a fusion feature of the image based on the third feature and the second feature, the data amount of the image feature can be reduced and the efficiency of image comparison can be improved.

Optionally, constructing a fusion feature of the target image based on the third feature and the second feature of the target image further includes: determining a hash code corresponding to the third feature and a hash code corresponding to the second feature of the target image; and obtaining the fusion feature of the target image by splicing the hash code corresponding to the third feature and the hash code corresponding to the second feature. In order to further reduce the amount of image feature data, the image feature can be hash coded, and the hash code is used to represent the fusion feature of the image. For example, the 512-dimensional third feature of is [0.7, 0.6, 0.2,..., 0.3, 0.8]. By comparing with the threshold 0.5, the hash code corresponding to this dimension feature is 1 if the dimension feature is greater than threshold 0.5, and the hash code corresponding to this dimension feature is 0 if the dimension feature is less than or equal to the threshold 0.5. Then, the 512-dimensional third feature is hash coded and expressed as [110...01]. According to the same method, the 256-dimensional second feature is hash coded, and the obtained hash code is expressed as [10...000]. After the hash codes are spliced, the final image fusion feature is [110...0110...000].

If the corresponding image fusion feature is constructed directly based on the first feature and the second feature, then the first feature and the second feature can be hash coded separately, and the hash codes can be spliced. Optionally, constructing the fusion feature of the target image based on the first feature and the second feature of the target image includes: respectively determining a hash code corresponding to the first feature and a hash code corresponding to the second feature of the target image; obtaining the fusion feature of the target image by splicing the hash code corresponding to the first feature and the hash code corresponding to the second feature For example, the 1024- dimensional first feature is [0.6, 0.6, 0.3,..., 0.7, 0.2]. By comparing with the threshold 0.5, the hash code corresponding to this dimension feature is 1 if the dimension feature is greater than threshold 0.5, and the hash code corresponding to this dimension feature is 0 if the dimension feature is less than or equal to the threshold 0.5. Then, the 1024-dimensional first feature is hash coded and expressed as [110...10]. According to the same method, the 256-dimensional second feature is hash coded, and the obtained hash code is expressed as [10...000]. After the hash codes are spliced, the final image fusion feature is [110...1010...000].

For the multi-task network, the code length of the second feature needs to be within a reasonable range. If it is too short, the effect of intra-category constraints is not sufficient, which is similar to under-fitting; if it is too long, the granularity is too fine, which is similar to excessive fitting, the present disclosure chooses the code length of the first feature to be 1024 and the code length of the second feature to be 256, which can well balance the influence of intra-category differences on the detection result. For a certain training network, if only the first feature code is used, the detection result will be greatly affected by the code length of the second feature. In the present disclosure, the first feature or the third feature and the second feature are spliced together, so that the finally obtained image has higher fusion feature stability.

Step 260, it is determined whether the target image is a near-duplicate image of the candidate image based on the fusion feature.

For the target image, the fusion features of the target image can be obtained through the steps described above. In addition, a candidate image set is stored in advance, and the fusion feature of each image in the candidate image set is obtained through the steps described above. Further, the similarity measurement method in the related art can be used to compare the fusion feature of the target image with the fusion feature of any candidate image in the candidate image set, so as to determine whether the target image and the candidate image are near-duplicate images of each other.

In the method of detecting a near-duplicate image disclosed in the embodiments of the present disclosure, a classification model is trained, then, based on parameters of the trained classification model, the multi-task network model is initialized, and the multi-task network model is trained based on image pair samples including near-duplicate image pairs and non-near-duplicate image pairs. A first feature and a second feature of the input target image are determined through the multi-task network model. A fusion feature of the target image is constructed based on the first feature and the second feature of the target image. Finally, based on the fusion feature, it is determined whether the target image is a near-duplicate image of the candidate image. In the method of detecting a near-duplicate image disclosed in the present disclosure, the classification model is pre-trained based on the convolutional neural network to increase the inter-category feature variance of images, and the classification and the similarity measurement multi-task network are fine-tuned using the learned parameters of the classification model to further increase the intra-category variance between non-near-duplicate images, so that in the image detection process, the optimized image features reflecting the inter-category differences and the intra-category differences and the more fine-grained image features reflecting intra-category differences are spiced as image fusion features. Thus, it can not only increase the inter-category feature variance, but can also further increase the intra-category variance between non-near-duplicate images, which is beneficial to improve the accuracy of detecting of an near-duplicate image.

In the multi-task network model disclosed in the present disclosure, the feature expression ability can be improved by splicing the features which are output by the classification network and the similarity measurement network. At the same time, compared to simply using image features reflecting inter-category differences and intra-category differences, the spliced image features are less affected by the features reflecting intra-category differences, and the feature stability can be higher.

### Third Embodiment

The embodiment discloses an apparatus of detecting a near-duplicate image, as shown in FIG. 7, includes:

a feature extraction module 710 configured to respectively determine a first feature and a second feature of an input target image through a multi-task network model, where the first feature includes an image feature reflecting an inter-category difference and an intra-category difference, and the second feature indicates an image feature reflecting an intra-category difference;

a feature fusion module 720 configured to construct a fusion feature of the target image based on the first feature and the second feature of the target image extracted by the feature extraction module 710;

a near-duplicate image detection module 730 configured to determine whether the target image is a near-duplicate image of a candidate image based on the fusion feature determined by the feature fusion module 720.

Optionally, the multi-task network model includes: a classification network and a similarity measurement network, and the classification network and the similarity measurement network share a basic network. Optionally, training the multi-task network model includes: training the multi-task network model by solving network parameters that satisfy both optimization goals of the classification network and the similarity measurement network, wherein the optimization goal of the classification network is to increase an inter-category variance between near-duplicate images; the optimization goal of the similarity measurement network is to reduce an intra-category variance between near-duplicate images and increase an intra-category variance between non-near-duplicate images.

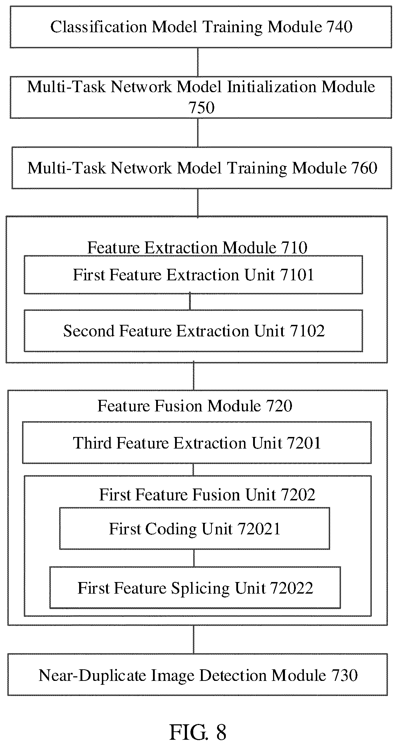

Optionally, as shown in FIG. 8, the feature extraction module 710 further includes:
a first feature extraction unit 7101 configured to determine the first feature of the target image through the basic network;
a second feature extraction unit 7102 configured to determine the second feature of the target image in the input image pair by performing a convolution operation on the first feature through the similarity measurement network, where the optimization goal of the similarity measurement network is to reduce the intra-category variance between near-duplicate images and increase the intra-category variance between non-near-duplicate images.

In the apparatus of detecting a near-duplicate image disclosed in embodiment of the present disclosure, a first feature and a second feature of input target image are respectively determined through a multi-task network model, wherein the first feature includes an image feature that reflects an inter-category difference and an intra-category difference, and the second feature indicates an image feature that reflects an intra-category difference; based on the first feature and second feature of the target image, a fusion feature of the target image is constructed; and based on the fusion feature, it is determined whether the target image is a near-duplicate image of a candidate image. By combining the intra-category information and the inter-category information of an image to construct the fusion feature of the image, the apparatus of detecting a near-duplicate image disclosed in the present disclosure makes sure that the image fusion feature is more comprehensive, thereby improving the accuracy of detecting a near-duplicate image.

Optionally, as shown in FIG. 8, the apparatus further includes:
a classification model training module 740 configured to train a classification model with a plurality of image samples including a plurality of near-duplicate images;
a multi-task network model initialization module 750 configured to initialize the multi-task network model based on parameters of the trained classification model;
a multi-task network model training module 760 configured to train the multi-task network model with image pair samples including a plurality of near-duplicate image pairs and a plurality of non-near-duplicate image pairs, where each of the plurality of near-duplicate image pairs is composed of any two images in an image set, the image set includes an original image and at least one image obtained from the original image by performing a preset image processing on the original image, and the non-near-duplicate image pair is composed of two different images.

Optionally, the image pair sample includes an image pair matching a specified image processing type, and the specified image processing type is determined by:
with the trained classification model, determining an image feature of each image in a test image pair; perform a near-duplicate image determination on the test image pair based on a distance between image features of two images in the test image pair; and determining the specified image processing type based on accuracies of a plurality of the near-duplicate determination which are performed on image pairs matching various image processing types.

Optionally, as shown in FIG. 8, the feature fusion module 720 further includes:
a third feature extraction unit 7201 configured to determine a third feature of the target image by performing a convolution operation on the first feature of the target image, where the third feature indicates an image feature reflecting an inter-category difference;
a first feature fusion unit 7202 configured to construct the fusion feature of the target image based on the third feature and the second feature of the target image.

Optionally, the first feature fusion module 7202 further includes:
a first coding unit 72021 configured to determine a hash code corresponding to the third feature and a hash code corresponding to the second feature of the target image;
a first feature splicing unit 72022 further configured to obtain the fusion feature of the target image by splicing the hash code corresponding to the third feature and the hash code corresponding to the second feature.

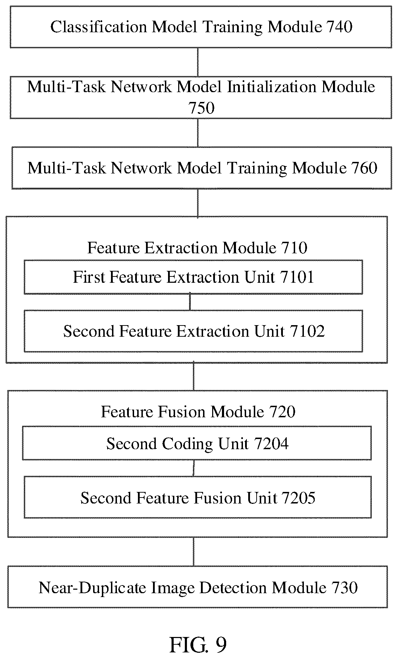

In another embodiment, as shown in FIG. 9, the feature fusion module 720 further includes:
a second coding unit 7204 configured to determine a hash codes corresponding to the first feature and a hash codes corresponding to the second feature of the target image respectively;
a second feature fusion unit 7205 configured to obtain the fusion feature of the target image by splicing the hash code corresponding to the first feature and the hash code corresponding to the second feature.

In the apparatus of detecting a near-duplicate image disclosed in the present disclosure, a classification model is pre-trained based on the convolutional neural network to increase the inter-category feature variance of images, and the classification and the similarity measurement multi-task network are fine-tuned using the learned parameters of the classification model to further increase the intra-category variance between non-near-duplicate images, so that in the image detection process, the optimized image features reflecting inter-category differences and intra-category differences and more fine-grained image features reflecting intra-category differences are spiced as image fusion features. Thus, it can not only increase the inter-category feature variance, but can also further increase the intra-category variance between non-near-duplicate images, which is beneficial to improve the accuracy of detecting of an near-duplicate image.

In the multi-task network model disclosed in the present disclosure, the feature expression ability can be improved by splicing the features which are output by the classification network and the similarity measurement network. At the same time, compared to simply using image features that reflect inter-category differences and intra-category differences, the spliced image features are less affected by the features that reflect intra-category differences, and the feature stability can be higher.

Correspondingly, the present disclosure also discloses an electronic device including a memory, a processor, and a computer program stored on the memory and executable on the processor, wherein the computer program is executed by the processor to implement the method of detecting a near-duplicate image as described in the first and second embodiments of the present disclosure. The electronic device may include a PC, a mobile terminal, a personal digital assistant, a tablet computer, etc.

The present disclosure also discloses a computer-readable storage medium having a computer program stored thereon, wherein the program is executed by a processor to implement the steps of the method of detecting a near-duplicate image as described in the first and second embodiments of the present disclosure.

The various embodiments in this specification are described in a progressive manner. Each embodiment focuses on the differences from other embodiments, and the same or similar parts between the various embodiments can be referred to each other. As for the apparatus embodiment, since it is basically similar to the method embodiment, the description is relatively simple, and for related parts, reference can be made to the part of the description of the method embodiment.

The above describes in detail a method and an apparatus of detecting a near-duplicate image provided by the present disclosure. Specific examples are used herein to illustrate the principle and implementation of the present disclosure. The description of the above examples only assists understanding the method of the present disclosure and its core idea. Moreover, for those of ordinary skill in the art, according to the idea of the present disclosure, there will be changes in the specific implementation and the scope of application. Accordingly, the content of this specification should not be understood as a limitation of the present disclosure.

Through the description of the above embodiments, those skilled in the art can clearly understand that each embodiment can be implemented by means of software plus a necessary general hardware platform, and of course it can also be implemented by hardware. Based on this understanding, the above technical solutions can be embodied in the form of software products, which can be stored in computer-readable storage media, such as ROM/RAM, magnetic A disc, an optical disc, etc., include a number of instructions to make a computer device (which may include a personal computer, a server, or a network device, etc.) to execute the method described in each embodiment or some parts of the embodiment.

## Claims

1. A method of detecting a near-duplicate image, comprising:
respectively determining a first feature and a second feature of an input target image through a multi-task network model, wherein the first feature comprises an image feature reflecting an inter-category difference and an intra-category difference, and the second feature indicates an image feature reflecting an intra-category difference;
constructing a fusion feature of the target image based on the first feature and the second feature of the target image; and
determining whether the target image is a near-duplicate image of a candidate image based on the fusion feature.

2. The method according to claim 1, wherein
the multi-task network model comprises a classification network and a similarity measurement network which share a basic network,
training the multi-task network model comprises:
training the multi-task network model by solving network parameters that satisfy both optimization goals of the classification network and the similarity measurement network, wherein
the optimization goal of the classification network is to increase an inter-category variance between near-duplicate images;
the optimization goal of the similarity measurement network is to reduce an intra-category variance between near-duplicate images and increase an intra-category variance between non-near-duplicate images.

3. The method according to claim 2, wherein respectively determining the first feature and the second feature of the target image through the multi-task network model comprises:
determining the first feature of the target image through the basic network; and
determining the second feature of the target image by performing a convolution operation on the first feature through the similarity measurement network.

4. The method according to claim 2 or 3, wherein prior to respectively determining the first feature and the second feature of the target image through the multi-task network model, the method further comprises:
training a classification model with a plurality of image samples comprising a plurality of near-duplicate images;
initializing the multi-task network model based on parameters of the trained classification model; and
training the multi-task network model with image pair samples comprising a plurality of near-duplicate image pairs and a plurality of non-near-duplicate image pairs, wherein
each of the plurality of near-duplicate image pairs is composed of any two images in an image set, the image set comprises an original image and at least one image obtained from the original image by performing a preset image processing on the original image, and
each of the plurality of non-near-duplicate image pairs is composed of two different images.

5. The method according to claim 4, wherein
the image pair samples comprise an image pair matching a specified image processing type, and
the specified image processing type is determined by:
with the trained classification model, determining an image feature of each image in a test image pair;
performing a near-duplicate image determination on the test image pair based on a distance between image features of two images in the test image pair; and
determining the specified image processing type based on accuracies of a plurality of the near-duplicate determination which are performed on image pairs matching various image processing types.

6. The method according to claim 1, wherein constructing the fusion feature of the target image based on the first feature and the second feature of the target image comprises:
determining a third feature of the target image by performing a convolution operation on the first feature of the target image, wherein the third feature indicates an image feature reflecting an inter-category difference; and
constructing the fusion feature of the target image based on the third feature and the second feature of the target image.

7. The method according to claim 6, wherein constructing the fusion feature of the target image based on the third feature and the second feature of the target image further comprises:
respectively determining a hash code corresponding to the third feature and a hash code corresponding to the second feature of the target image; and
obtaining the fusion feature of the target image by splicing the hash code corresponding to the third feature and the hash code corresponding to the second feature.

8. The method according to any one of claims 1 to 3, wherein constructing the fusion feature of the target image based on the first feature and the second feature of the target image comprises:
respectively determining a hash code corresponding to the first feature and a hash code corresponding to the second feature of the target image; and
obtaining the fusion feature of the target image by splicing the hash code corresponding to the first feature and the hash code corresponding to the second feature.

9. An apparatus of detecting a near-duplicate image, comprising:
a feature extraction module configured to respectively determine a first feature and a second feature of an input target image through a multi-task network model, wherein the first feature comprises an image feature reflecting an inter-category difference and an intra-category difference, and the second feature indicates an image feature reflecting an intra-category difference;
a feature fusion module configured to construct a fusion feature of the target image based on the first feature and the second feature of the target image extracted by the feature extraction module; and
a near-duplicate image detection module configured to determine whether the target image is a near-duplicate image of a candidate image based on the fusion feature determined by the feature fusion module.

10. An electronic device comprising a memory, a processor, and a computer program stored on the memory and executable on the processor, wherein the computer program is executed by the processor to implement the method of detecting a near-duplicate image according to any one of claims 1 to 8.

11. A computer-readable storage medium having a computer program stored thereon, wherein the program is executed by a processor to implements the steps of the method of detecting a near-duplicate image according to any one of claims 1 to 8.
